# EUROPEAN PATENT APPLICATION

(11) **EP 4 601 215 A1**
(43) Date of publication of application: **13.08.2025**
(21) Application number: 24156957.3
(22) Date of filing: 09.02.2024
(51) Int. Cl.: H04B 7/185, B64D 45/00

(54) **METHOD, CONTROL UNIT AND COMMUNICATION SYSTEM FOR PROVIDING A DATA CONNECTION, AND VEHICLE COMPRISING SAME**

(71) Applicant: Airbus S.A.S., 31700 Blagnac (FR)
(72) Inventor: Dominic Schupke, 82024 Taufkirchen (DE); Aygün Baltaci, 82024 Taufkirchen (DE)
(74) Representative: OTN Airbus SAS

(57) **Abstract**

A Method, a control unit (24), a communication system (2), and a vehicle (1) are described. For providing a data connection (C) between a sender (A) on a vehicle (1), in particular an aircraft, and at least one receiver (B), via terrestrial transceiving module (21) of the vehicle (1) primarily configured to communicate with at least one terrestrial station (3) and/or via non-terrestrial transceiving module (22) of the vehicle (1) primarily configured to communicate with at least one a non-terrestrial station (4), the method comprising the steps of monitoring a connection parameter (S) of the data connection (C) and/or an orientation parameter (D) of the vehicle (1) with respect to the at least one terrestrial station (3) and/or to the at least one non-terrestrial station (4); comparing the connection parameter (S) to a connection threshold value (T) and/or the orientation parameter (D) to an orientation threshold value (E), respectively, wherein when the comparison indicates regular conditions (O), the data connection (C) is provided by means of the terrestrial transceiving module (21) connecting to the terrestrial station (3), and/or by means of the non-terrestrial transceiving module (22) connecting to the at least one non-terrestrial station (4), and wherein when the comparison indicates irregular conditions (P), the data connection (C) is provided by means of the terrestrial transceiving module (21) connecting to the non-terrestrial station (4), and/or by means of the non-terrestrial transceiving module (22) connecting to the terrestrial station (3).

## Description

### Technical Field

The present description relates to the field of enabling wireless communication between senders on airborne vehicles and receivers. In particular, the disclosure relates to a method of providing a data connection between a sender on a vehicle, in particular an aircraft, and at least one receiver, via terrestrial transceiving module of the vehicle primarily configured to communicate with at least one terrestrial station and/or via non-terrestrial transceiving module of the vehicle primarily configured to communicate with at least one a non-terrestrial station, to a control unit for providing a data connection between a sender on a vehicle, in particular an aircraft, and at least one receiver, to a communication system for a vehicle, and to a vehicle, in particular an aircraft.

### Technical Background

Wireless communications between senders on airborne vehicles and receivers are known from the prior art. The vehicles, such as aircraft, are commonly provided with terrestrial transceivers to communicate with terrestrial stations and with non-terrestrial transceivers configured to communicate with non-terrestrial stations, such as satellites, or other aircraft. The receivers may be located at, or communication may take place via said stations.

Data connections established by means of the wireless can be used on the one hand, for any kind of data exchanges during standard flight situations, including radio communications between personnel and/or passengers on board of the vehicles, and ground crew, as well as for Internet communications, or alike. Furthermore, the data connections can be used to deliver recorded flight data to the ground and/or, to receive mission data from the ground, the latter being particularly relevant for defence platforms and systems. In any case, it is desirable that the communications are stable, such that no data is lost, which can be particularly relevant for flight data, since flight data recorders cannot always be recovered after certain incidents, such as accidents, for various reasons.

EP 3 828 840 A1, for example, relates to a method for acquiring vehicle data of a vehicle, and to a data acquisition system for acquiring vehicle data of a vehicle, having a first data acquisition unit and a second data acquisition unit, which is used to transmit vehicle data via a data connection to the first data acquisition unit. A fastening mechanism provides fastening of the second data acquisition unit in a fastened state to the vehicle, and a release mechanism can release the fastening of the second data acquisition unit to the vehicle. to bring the second data acquisition unit into a released state. The release mechanism can release the attachment of the second data acquisition unit based on a prediction of a vehicle condition of the vehicle. The second data acquisition unit can maintain the data connection between the first data acquisition unit and the second data acquisition unit in the released state by means of a radio connection until the second data acquisition unit receives a termination signal from the first data acquisition unit.

EP 3 685 523 B1 system and method for providing wireless data communication between a wireless communication system in an aircraft and a stationary communication server outside the aircraft are disclosed. The system comprises a router connected to a directional antenna, the router being configured to transmit and receive wireless data communication to and from a stationary communication server outside said aircraft through at least one ground base station via said antenna. The system further has a control unit configured to determine an attitude change of said aircraft by determining a change in at least one of a roll angle, pitch angle and/or yaw angle of said aircraft, and an antenna steering unit connected to said control unit and being configured to steer an antenna beam of said directional antenna based on the determined attitude change of said aircraft. Hereby, it is possible to provide a more stable data link between clients connected to the aircraft's wireless communication system and remote external servers.

EP 2 985 926 B1 describes a wireless aircraft network comprising a plurality of aircraft having transceiver devices for transceiving wireless communication, a plurality of ground-based network stations having transceiver devices for transceiving wireless communication, and a network operator station configured to store location data regarding the current geographical location of the plurality of aircraft in a location data table of the network operator station and to determine a most efficient network path for each of the plurality of aircraft to one of a plurality of ground-based network stations depending on the current geographical location of the plurality of aircraft and the geographical location of the plurality of ground-based network stations.

EP 2 145 426 B1 relates to a system enabling communication between an aircraft-based computer network and a ground-based computer network, characterised in that the system includes means for establishing a network communication between a ground-based computer network and an aircraft-based computer network via at least one communication medium using a synchronous communication mode.

Methods and systems for enabling communication between senders on airborne vehicles and receivers, as known from the prior art, cannot fully satisfy communication needs in terms of reliability and availability on the one hand, as well as performance and comfort on the other hand. For example, current satellite modems on board aircraft cannot guarantee data delivery and any flight attitude. The coverage at high latitudes can be unstable, unpredictable, and/or the operation regions can be banned or constrained. Thus, data connections may be interrupted, which can lead to that flight data may be lost, or mission data may not be properly received.

### Summary

It may thus be seen as an object to provide both, improved reliability, and availability for any type of data communication between senders on airborne vehicles and receivers, or vice versa. In particular, it may be regarded as an object to provide seamless worldwide coverage as well as reliable connectivity at any aircraft attitude. These objects are at least partially solved by the subject-matter of the independent claims.

According to an aspect, a method is provided, for providing a data connection between a sender on a vehicle, in particular an aircraft, and at least one receiver, via terrestrial transceiving module of the vehicle primarily configured to communicate with at least one terrestrial station and/or via non-terrestrial transceiving module of the vehicle primarily configured to communicate with at least one a non-terrestrial station, the method comprising the steps of monitoring a connection parameter of the data connection and/or an orientation parameter of the vehicle with respect to the at least one terrestrial station and/or to the at least one non-terrestrial station; comparing the connection parameter to a connection threshold value and/or the orientation parameter to an orientation threshold value, respectively, wherein when the comparison indicates regular conditions, the data connection is provided by means of the terrestrial transceiving module connecting to the terrestrial station, and/or by means of the non-terrestrial transceiving module connecting to the at least one non-terrestrial station, and wherein when the comparison indicates irregular conditions, the data connection is provided by means of the terrestrial transceiving module connecting to the non-terrestrial station, and/or by means of the non-terrestrial transceiving module connecting to the terrestrial station.

According to an aspect, a control unit is provided for providing a data connection between a sender on a vehicle, in particular an aircraft, and at least one receiver, wherein the control unit is configured to carry out a corresponding method.

According to an aspect, a communication system for a vehicle is provided, configured to carry out a corresponding method and/or comprising a corresponding control unit.

According to an aspect, a vehicle, in particular an aircraft, is provided, comprising a corresponding communication system.

A corresponding computer program comprises instructions which, when the program is executed by the control unit, the communication system and/or the vehicle, cause the control unit, the communication system and/or the vehicle to carry out a corresponding method. A computer-readable data carrier has stored thereon the computer program. The computer-readable data carrier may include and/or be comprised of a computer-readable medium and/or a data carrier signal carrying the computer program.

The data connection can be established between dedicated transceiving modules and their respective communication partners under regular conditions. Should irregular conditions occur, the data connection may be maintained by connecting the transceiving modules to other communication partners for which the transceiving modules are not primarily configured to communicate with. With other words, under regular conditions, the data connection can be provided between designated regular communication partners, whereas under irregular conditions, the data connection can be provided between available irregular communication partners. Thereby, a regular communication setup and an irregular communication setup can be provided for maintaining the data connection through regular conditions and irregular conditions, respectively. Regular conditions may occur during a normal state and irregular conditions may occur during an abnormal state of the vehicle, and/or the sender

This solution enables implementation of an agnostic non-terrestrial-networks (NTNs)-based architecture to provide reliable communications in any flight situation and in any region. The architecture can be based on modems that are able to operate in both, an Air-to-Ground (A2G) mode, and an Air-to-Satellite (A2S), i.e., NTN mode. The modems can operate on either mode, or even both most dynamically changing between A2G and A2S, depending on flight attitude as well as distress emergency trigger status.

The proposed solution thus provides improved reliability and availability for any type of data communication between senders on airborne vehicles and receivers, or vice versa. Seamless worldwide coverage and reliable connectivity at any aircraft attitude can be achieved. Thus, the solution allows any aerial use case to benefit from an agnostic communication architecture, including fighter jets, and data retrieval from flight recorder systems.

Further developments can be derived from the dependent claims and from the following description. Features described with reference to methods may be implemented as device features, or vice versa. Therefore, the description provided in the context of the method applies in an analogous manner also to a control unit, communication system, and/or vehicle. In particular, the steps of the method and mentioned components involved therein may be implemented as functions of the control unit, communication system, and/or vehicle, and any functions of the control unit, communication system, and/or vehicle may be implemented as method steps.

According to an embodiment of a method, the terrestrial transceiving module comprises a terrestrial antenna device, and/or the non-terrestrial transceiving module comprises a non-terrestrial antenna device. The antenna devices may be both operated in designated mode under regular conditions and may be operated in an auxiliary mode during irregular conditions. Respective antenna beams may be generated in each of the modes. The antennas can be configured as steering antennas. The proposed architecture thus also leverages the reuse of existing communication hardware on-board aircraft that are already installed for different services.

According to an embodiment of a method, the terrestrial transceiving module and the non-terrestrial transceiving module communicate through a common modem device and/or a common communication standard. Thereby, a duplication of respective modules and standards can be prevented. The terrestrial transceiving module and/or terrestrial antenna device, as well as the non-terrestrial transceiving module and/or non-terrestrial antenna device may be used interchangeably for providing the data connection via the non-terrestrial station and/or the terrestrial station. This further increases efficiency of the use of available resources.

According to an embodiment of a method, the connection parameter represents a connection quality and/or a signal strength. The connection quality and/or signal strength may change due to various reasons, including atmospheric conditions, but also technical conditions. Taking the connection quality and/or signal strength into account, allows for a differentiated assessment of whether the comparison indicates regular and/or irregular conditions, thus providing flexible and dynamic adjustment of the data connection.

According to an embodiment of a method, the orientation parameter contains an attitude value representing an attitude of the vehicle. The attitude value may comprise a pitch value, a roll value, and/or a yaw value. Taking the attitude value into account, allows for a further differentiated assessment of whether the comparison indicates regular and/or irregular conditions, thus enhancing flexible and dynamic adjustment of the data connection.

According to an embodiment of a method, the method further comprises the step of the step of the switching between the terrestrial transceiving module connecting to the terrestrial station, and/or non-terrestrial transceiving module connecting to the at least one non-terrestrial station, and/or the terrestrial transceiving module connecting to the non-terrestrial station, and/or the non-terrestrial transceiving module connecting to the terrestrial station. The switching allows for quickly adjusting the data connection. This helps in further improving reliability and availability of the data connection.

According to an embodiment of a method, the method further comprises the step of simultaneously connecting the terrestrial transceiving module to the terrestrial station, and/or non-terrestrial transceiving module connecting to the at least one non-terrestrial station, and/or the terrestrial transceiving module to the non-terrestrial station, and/or the non-terrestrial transceiving module to the terrestrial station. This allows for a seamless adjustment of the data connection, in particular, in that switching between transceiving modules can be performed under minimal risk of losing the data connection. Thereby, the reliability and availability of the data connection may be further improved.

According to an embodiment of a method, during a pre-trigger phase, the data connection is being established before being used. Certain communication channels can be established between the connection partners before an actual (bulk) data transfer takes place. During such a phase, handshakes and synchronizations may be established to keep the data connection readily available and thus avoid any data loss. This helps in further improving reliability and availability of the data connection.

According to an embodiment of a method, a during a post-trigger phase, the data connection is being upheld after being used. Certain communication channels can be maintained between the connection partners after an actual (bulk) data transfer took place. During such a phase, handshakes and synchronizations may be maintained to still keep the data connection readily available and thus avoid any data loss. This additionally helps in further improving reliability and availability of the data connection.

According to an embodiment of a method, the data connection is configured for sending data stream from the sender to the receiver. A data stream can allow for exchanging relatively large amount of data and/or live data in uninterrupted, a at low latencies. This helps in further improving performance and versatility of the data connection.

According to an embodiment of a method, the data connection is configured and/or reserved for transferring mission data. The mission data may take the form of or comprise flight data of an aircraft The data connection can thereby particularly enable to provide flight data and/or mission data in a prioritised manner. This helps in minimising any loss and at the same time maximising availability of flight data and/or mission data.

According to an embodiment of a communication system, the sender comprises a recording device for recording flight data and/or mission data. The recording device may be provided in the form of Flight Data Recorder System (FDRS). The communication system may comprise any arrangement of sensors and actuators for gathering and/or receiving mission data, which may include any kind of flight data. This helps in providing data redundancy and thus avoiding any loss of flight data.

### Brief Description of the Drawings

The subject matter will hereinafter be described in conjunction with the following drawing figures, wherein like numerals denote like elements, and wherein:
Fig. 1 is a schematic representation of a vehicle comprising a communication system operating under regular conditions.
Fig. 2 is schematic representation is a schematic representation of the vehicle comprising the communication system illustrated in Fig. 1 operating under irregular conditions.
Fig. 3 is a schematic representation of different operational modes of the communication system.
Fig. 4 is schematic representation of the steps of a method of providing a data connection between a sender on the vehicle and a receiver.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

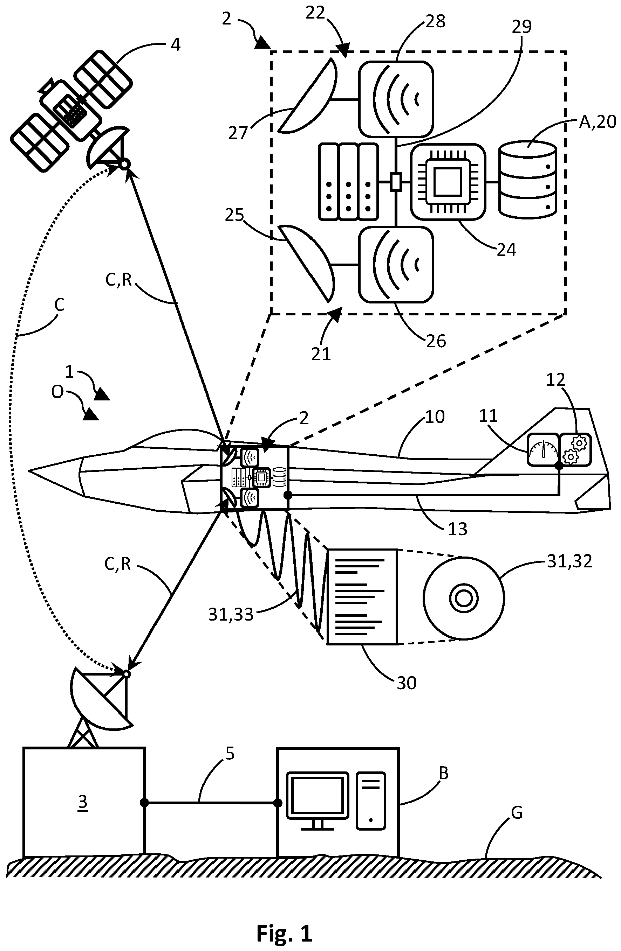

Fig. 1 shows a schematic representation of a vehicle 1, in particular an aircraft, comprising a communication system 2 configured to provide a data connection C between a sender A on the vehicle 1 and a receiver B. The receiver B may be located at a ground G and may communicate with the vehicle 1 and/or a terrestrial station 3, such as a ground station, via a non-terrestrial station 4, for example, a satellite, and/or via a communication infrastructure 5, which may involve any suitable wired and wireless communication means, including lines, cables, transceivers, antennas, satellite dishes, and alike. The receiver A may comprise a computing device 6 for storing and/or processing any data received from the sender A.

The vehicle 1 has a body 10, for example, in the form of an outer shell, casing, covering, enclosure, hull, supportive structure, or alike, and comprises sensor elements 11 and actor elements 12. The sensor elements 11 and/or actor elements 12 can be connected to each other and/or to the communication system to via respective control lines 13. In the present example, the vehicle 1 is provided as an aircraft, and therefore configured to be airborne. As illustrated in Fig. 1, the vehicle 1 operates under regular operating conditions R (e.g., canopy up).

The communication system 2 can comprise the sender A which may comprise and/or maybe be provided in the form of a recording device 20 that can be configured to record flight data and/or mission data of the vehicle 1. The communication system 2 further comprises a terrestrial transceiving module 21, a non-terrestrial transceiving module 22, a modem device 23, and a control unit 24. The terrestrial transceiving module 21 can comprise a terrestrial antenna device 25 and a terrestrial transmitting device 26 primarily configured for establishing communication with the terrestrial station 3. The non-terrestrial transceiving module 22 can comprise a non-terrestrial antenna device 27 and a non-terrestrial transmitting device 28 primarily configured for establishing communication with the non-terrestrial station 4.

The antenna devices 25, 27 may be configured as steering antennas, allowing to generate a radio beam R under a respective beam angle α (e.g., with respect to a default position, axis, direction, ground, or any desired reference system), for establishing the data connection C. The terrestrial transceiving module 21 may comprise a belly antenna for airborne communications and/or a gate link antenna for ground communication of the vehicle 1 as at least one terrestrial antenna device 25, primarily configured for A2G communications. The non-terrestrial transceiving module 22 may comprise a top antenna for airborne communication of the vehicle 1 as at least one non-terrestrial antenna device 27, primarily configured for A2S communications. As illustrated in Fig. 1, under regular operating conditions R, the data connection C is established between the terrestrial transceiving module 21 and the terrestrial station 3, and/or between the non-terrestrial transceiving module 22 and the non-terrestrial station 4, respectively.

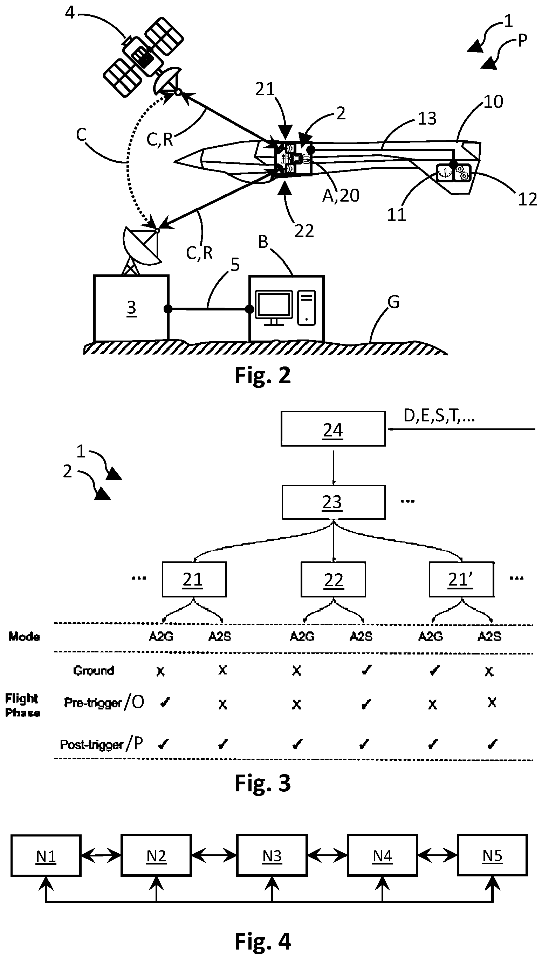

The sender A, recording device 20, terrestrial transceiving module 21, non-terrestrial transceiving module 22, modem device 23, control unit 24, terrestrial antenna device 25, terrestrial transceiver device 26, non-terrestrial antenna device 27, and/or non-terrestrial transceiver the vice 28 may be connected to each other by means of at least one transmission line 29 as required. The communication system 2 may be configured to execute a computer program 30. A computer-readable data carrier 31 can have stored thereon the computer program 30 and may take the form of a computer-readable medium 32 and/or data carrier signal 33. When carrying out the computer program 30, the vehicle 1 and/or operating system 2 communicate as specified in the computer program 30 4 communications under the regular operating conditions O and under irregular operating conditions P (e.g., canopy down, see Fig.2).

Parameters associated to and/or underlying a definition of the regular operating conditions O and/or irregular operating conditions P, such as operation modes A2G, A2S, connection parameters S, connection threshold values T, orientation parameters D, orientation threshold values E, and/or other measurement and/or actuation values, which may be acquired and/or set, respectively, by means of the sensor element 11, and/or actor element 12, may be defined in the computer program 30. The connection parameters S may represent a connection quality and/or signal strength of the connection C and/or radio beam R. Orientation parameters D may represent travel and/or flight dynamics, such as aircraft attitude values, respective reference frames for a longitudinal direction X, a transverse direction Y, a height direction Z, yaw angles ψ, pitch angles θ, and/or roll angles φ, as well as respective transformations, etc.

Fig. 2 is schematic representation is a schematic representation of the vehicle 1 comprising the communication system illustrated in Fig. 1 operating under irregular conditions P (e.g., canopy down). For switching respective communication modes A2G, A2S (see Fig. 3) of the communication system 2 between regular conditions O and irregular conditions P, the control unit 24 continuously monitors and/or compares the connection parameters S, the connection threshold values T, the orientation parameters D, the orientation threshold values E, and/or other measurement and/or actuation values. Here, under irregular operating conditions P, the data connection C is established between the terrestrial transceiving module 21 and the non-terrestrial station 4, and/or between the non-terrestrial transceiving module 22 and the terrestrial station 3, respectively.

Fig. 3 is a schematic representation of the different operational modes A2G, A2S of the communication system 2 according to respective flight phases of the vehicle 1 under regular conditions O and irregular conditions P. The control unit 24 receives and/or continuously monitors and/or compares the connection parameters S, the connection threshold values T, the orientation parameters D, the orientation threshold values E, and/or other measurement and/or actuation values. Based on respective comparisons, the modem device 23 is directed to communicate via the terrestrial transceiving module 21 and/or the non-terrestrial transceiving module 22 in the different operational modes A2G, A2S. A further terrestrial transceiving module 21' may comprise a terrestrial antenna device 25 and/or terrestrial transceiver device, configured as a ground antenna, for ground operations, as already mentioned above.

The modem device 24 may be operated, for example, according to the NTN communication standard, such that both, the terrestrial transceiving module 21 and the non-terrestrial transceiving module 22 may communicate through a common modem device and/or a common communication standard. NTN is a recent work item in the so-called 3^{rd} Generation Project Partnership (3GPP) to extend the scope of similar communications beyond conventional terrestrial networks. The respective application as the modem device 24, as described herein, thus helps paving the way for communicating over ground-based and/or satellite-based networks only with a single modem.

Different options exist to change between the operation modes A2G, A2S, such as (re-)booting the modem device 24 in a respective mode, roaming, or dual axis with a feature like *"FS_DualStee"* (see, e.g., 3GPP Rel-19 SA1 new SID, 3GPP, "Study on Upper layer steer, switch and split over dual 3GPP access [release 19]' TR 22.841, Section 5.4 - essentially referring to traffic aggregation/plating between different because on higher network layers). Hence, the modem device 24 can be used in hybrid way to enable both, terrestrial and non-terrestrial communications by establishing respective data connections C according to operational modes A2G, A2S based on the connection parameters S, the connection threshold values T, the orientation parameters D, the orientation threshold values E, and/or other measurement and/or actuation values.

As can be seen in Fig. 3, for example, if the vehicle 1 is on the ground, for the terrestrial transceiving module 21, both operational modes A2G, A2S may be disabled (x). For the non-terrestrial transceiving module 22, the operational mode A2G may be disabled, while the operational mode A2S may be enabled (✔). For the further terrestrial transceiving module 21', the operational modes A2G may be enabled, while the operational mode A2S is disabled.

During flight of the vehicle 1 under regular conditions O in a pre-trigger phase before a recognition of irregular conditions P triggers respective operations, the data connection C is established and/or maintained, in that, for example, for the terrestrial transceiving module 21, the operational modes A2G may be enabled, why the operational mode A2S may be disabled. For the non-terrestrial transceiving module 22, the operational mode A2G may be disabled, while the operational mode A2S is enabled. For the further terrestrial transceiving module 21', both operational mode A2G, A2S may be disabled. For communication purposes under irregular conditions P, for instance after recognition of such conditions triggers respective operations, the data connection C is established and/or maintain, and that, for example, for the terrestrial transceiving module 21, the non-terrestrial transceiving module 22, and/or the further terrestrial transceiving module 21', both operational modes A2G, A2S may be enabled.

Hence, during normal flight, i.e., under regular operating conditions O, the transceiving modules 21, 21', 22 and the respective antennas have a particular role. For example, while the terrestrial transceiving module 21 and the non-terrestrial transceiving module 22 are used for the operating modes A2G and A2S, respectively, the further terrestrial transceiving module 21' is used only when the vehicles on the ground, for example, to offload flight sensor data from the recording device 20. However, if irregular conditions P occur during flight, a respective "trigger" can be activated and all transceiving modules 21, 21', 22 can be turned on for simultaneous use. The control unit 24 can primarily aim at maintaining a current mode of each of the transceiving modules 21, 21', 22 by aligning an orientation of respective radio beams R with respect to changes in orientation parameters D of the vehicle 1.

If the orientation parameters D and/or the connection parameters S exceed the orientation threshold value E and/or the connection threshold value T, respectively, indicating irregular operating conditions P, for example, when a quality of the data connection C by any of the transceiving modules 21, 21', 22 degrades to a certain predefined threshold (e.g., due to an extreme aircraft roll), then the control unit 24 may activate a second radio beam R of the transceiving modules 21, 21', 22 the switch on another operational mode A2G, A2S (e.g., if the transceiving module 21, 21' was in the operational mode A2G, the control unit 24 then turns on the respective radio beam R for establishing the data connection C in the operational mode A2S).

The transceiving modules 21, 21', 22 may use both the operational modes A2G, A2S simultaneously. Therefore, the terrestrial antenna device 25 and/or the non-terrestrial antenna device 27 may actively use two or more of the radio beams R at the same time at least until it can establish connectivity on at least one of the radio beams R by establishing the respective data connection C. This enables seamless change between the operational modes A2G, A2S on each of the transceiving modules 21, 21', 22 and by means of their respective antenna devices 25, 27.

As an orientation of the vehicle 1, e.g., aircraft attitude, can rapidly change during irregular conditions P, unidirectional traffic may be implemented via reserved network resources on a core network by the communication system 2, in particular, for communications with the terrestrial station 3, for example, for transferring flight data and/or mission data. Such a mechanism may help in avoiding any delays due to recurring channel access procedures during mode changes of the transceiving modules 21, 21', 22. The communication system to on-board of the vehicle one can also dedicate network resources and apply traffic participation schemes for data streams from the recording device 20. In addition, the control unit 24 can utilise various redundancy techniques, such as packet retransmission, network coding, redundant transmission via multiple links, etc., for example, to ensure that an entire dataset of the recording device 20 can be delivered to the ground G.

Fig. 4 is schematic representation of the steps N of a method of providing the data connection C between a sender A on the vehicle 1 and a receiver B. A first step N1 involves the connection parameter S of the data connection C and/or the orientation parameter D of the vehicle 1 with respect to the at least one terrestrial station 3 and/or to the at least one non-terrestrial station 4. A second step N2 involves comparing the connection parameter S to the connection threshold value T and/or the orientation parameter D to the orientation threshold value E, respectively. A third step N3 involves determining the operational modes A2G, A2S, respectively, in that when the comparison indicates the regular conditions O, the data connection C is provided by means of the terrestrial transceiving module 21 connecting to the terrestrial station 3, and/or by means of the non-terrestrial transceiving module 22 connecting to the at least one non-terrestrial station 4, and in that when the comparison indicates the irregular conditions P, the data connection C is provided by means of the terrestrial transceiving module 21 connecting to the non-terrestrial station 4, and/or by means of the non-terrestrial transceiving module 22 connecting to the terrestrial station 3.

A step N4 may involve switching between the terrestrial transceiving module 21 connecting to the terrestrial station 3, and/or non-terrestrial transceiving module 22 connecting to the at least one non-terrestrial station 4, and/or the terrestrial transceiving module 21 connecting to the non-terrestrial station 4, and/or the non-terrestrial transceiving module 22 connecting to the terrestrial station 3. A step N5 may involve simultaneously connecting the terrestrial transceiving module 21 to the terrestrial station 3, and/or the non-terrestrial transceiving module 22 to the at least one non-terrestrial station 4, and/or the terrestrial transceiving module 21 to the non-terrestrial station 4, and/or the non-terrestrial transceiving module 22 to the terrestrial station 3. Of the steps N1 to N5 may be carried out with the help of the control unit 24 in an iterative, serial, and/or parallel manner in any succession and/or arrangement required.

### List of Reference Signs

- 1: vehicle (aircraft)
- 2: communication system
- 3: terrestrial station / ground station
- 4: non-terrestrial station/satellite
- 5: communication infrastructure

- 10: vehicle body
- 11: sensor element
- 12: actor element
- 13: control line

- 20: recording device
- 21: terrestrial transceiving module
- 21': further terrestrial transceiving module
- 22: non-terrestrial transceiving module
- 23: modem device
- 24: control unit
- 25: terrestrial antenna device
- 26: terrestrial transceiver device
- 27: non-terrestrial antenna device
- 28: non-terrestrial transceiver device
- 29: transmission line
- 30: computer program
- 31: computer-readable data carrier
- 32: computer-readable medium
- 33: data carrier signal

- A: sender
- B: receiver
- C: data connection
- D: orientation parameter
- E: orientation threshold value
- G: ground
- N: method step
- O: regular operating conditions
- P: irregular operating conditions
- S: connection parameter
- T: connection threshold value
- R: radio beam

- A2G: Air-to-Ground
- A2S: Air-to-Sky/Space

- N1: monitor parameters
- N2: compare parameters
- N3: determine operational mode
- N4: switching between modules
- N5: simultaneous connection

- α: beam angle
- ψ: yaw angle
- θ: pitch angle
- φ: roll angle

- ✔: enabled
- ×: disabled

## Claims

1. Method of providing a data connection (C) between a sender (A) on a vehicle (1), in particular an aircraft, and at least one receiver (B), via terrestrial transceiving module (21) of the vehicle (1) primarily configured to communicate with at least one terrestrial station (3) and/or via non-terrestrial transceiving module (22) of the vehicle (1) primarily configured to communicate with at least one a non-terrestrial station (4), the method comprising the steps of
monitoring a connection parameter (S) of the data connection (C) and/or an orientation parameter (D) of the vehicle (1) with respect to the at least one terrestrial station (3) and/or to the at least one non-terrestrial station (4);
comparing the connection parameter (S) to a connection threshold value (T) and/or the orientation parameter (D) to an orientation threshold value (E), respectively,
wherein when the comparison indicates regular conditions (O), the data connection (C) is provided by means of the terrestrial transceiving module (21) connecting to the terrestrial station (3), and/or by means of the non-terrestrial transceiving module (22) connecting to the at least one non-terrestrial station (4), and
wherein when the comparison indicates irregular conditions (P), the data connection (C) is provided by means of the terrestrial transceiving module (21) connecting to the non-terrestrial station (4), and/or by means of the non-terrestrial transceiving module (22) connecting to the terrestrial station (3).

2. Method according to claim 1, wherein the terrestrial transceiving module (21) comprises a terrestrial antenna device (25), and/or the non-terrestrial transceiving module (22) comprises a non-terrestrial antenna device (27).

3. Method according to claim 1 or 2, wherein the terrestrial transceiving module (21) and the non-terrestrial transceiving module (22) communicate through a common modem device (24) and/or a common communication standard.

4. Method according to at least one of claims 1 to 3, wherein the connection parameter (S) represents a connection quality and/or a signal strength.

5. Method according to at least one of claims 1 to 4, wherein the orientation parameter (D) contains an attitude value (ψ, θ, φ) representing an attitude of the vehicle (1).

6. Method according to at least one of claims 1 to 5, further comprising the step of the switching between the terrestrial transceiving module connecting to the terrestrial station (3), and/or non-terrestrial transceiving module (22) connecting to the at least one non-terrestrial station (4), and/or the terrestrial transceiving module (21) connecting to the non-terrestrial station (4), and/or the non-terrestrial transceiving module (22) connecting to the terrestrial station (3).

7. Method according to at least one of claims 1 to 6, further comprising the step of simultaneously connecting the terrestrial transceiving module to the terrestrial station (3), and/or non-terrestrial transceiving module (22) connecting to the at least one non-terrestrial station (4), and/or the terrestrial transceiving module (21) to the non-terrestrial station (4), and/or the non-terrestrial transceiving module (22) to the terrestrial station (3).

8. Method according to at least one of claims 1 to 7, wherein during a pre-trigger phase, the data connection (C) is being established before being used.

9. Method according to at least one of claims 1 to 8, wherein a during a post-trigger phase, the data connection (C) is being upheld after being used.

10. Method according to at least one of claims 1 to 9, wherein the data connection (C) is configured for sending data stream from the sender (A) to the receiver (B).

11. Method according to at least one of claims 1 to 9, wherein the data connection (C) is configured and/or reserved for transferring mission data.

12. Control unit (24) for providing a data connection (C) between a sender (A) on a vehicle (1), in particular an aircraft, and at least one receiver (B), wherein the control unit (24) is configured to carry out a method according to at least one of claims 1 to 11.

13. Communication system (2) for a vehicle (1), configured to carry out a method according to at least one of claims 1 to 11, and/or comprising a control unit (24) according to claim 12.

14. Communication system (2) for a vehicle (A) according to claim 13,
wherein the sender (A) comprises a recording device (20) for recording flight data and/or mission data.

15. Vehicle (1), in particular an aircraft, comprising a communication system according to claim 14.
